# EUROPEAN PATENT SPECIFICATION

(11) **EP 3 092 107 B1**
(45) Date of publication and mention of the grant of the patent: **29.08.2018**
(21) Application number: 15713814.0
(22) Date of filing: 07.01.2015
(51) Int. Cl.: B23Q 16/00, B23Q 16/02, B23C 3/30, B23D 47/12, B27G 13/00, B27C 9/04

(54) **A WOOD PANEL MACHINE COMPRISING A MECHANICAL DEVICE FOR A DYNAMIC ADJUSTMENT OF ROTARY TOOLS**
MASCHINE FÜR HOLZAPANELEN MIT EINER EINRICHTUNG ZUR DYNAMISCHE ANPASSUNG VON DREHENDEN WERKZEUGEN
MACHINE POUR PANEAUX DE BOIS, COMPRENANT UN DISPOSITIF MÉCANIQUE POUR RÉGLAGE DYNAMIQUE D'OUTILS ROTATIFS

(30) Priority: 10.01.2014 IT VI20140002
(43) Date of publication of application: 16.11.2016
(73) Proprietor: Schiavon S.r.l., 31052 Maserada sul Piave (TV) (IT)
(72) Inventor: SCHIAVON, Mirko, I-31052 Maserada sul Piave (TV) (IT)
(74) Representative: Burchielli, Riccardo
(86) International application number: PCT/IT2015/000006
(87) International publication number: WO 2015/104730

(56) References cited:
- US-A- 3 838 722

## Description

The present invention relates to a wood panel machine, comprising a mechanical device for a dynamic adjustment, according to the preamble of claim 1. Such a machine is known from US3838722A1. More particularly, the invention relates to a wood panel machine, comprising a mechanical device for a dynamic adjustment of cutters employed for carrying out recesses and used in machines for working wood, specifically for squaring wood panels.

Typically, when wood panels are processed, said cutters are mounted on shafts and/or spacers and are placed in rotation towards a specific direction by a spindle connected to suitable kinematic organs configured to be connected to a rotatably drive; the wood product can be permanently attached to a reference plane or placed in a relative motion with respect to the cutters.

Currently, in order to make different types of grooves or channels with different dimensions and/or geometries on a wood panel, it is necessary to use two adjustable cutters mounted on the same axis, the distance of which is manually regulated by the user from time to time.

Therefore, obvious and unwanted interruptions of the machine must be provided and specialized personnel is needed.

The present invention aims, therefore, to overcome the drawbacks of the above mentioned prior art and, in particular, the main purpose of the invention is to provide a machine configured to provide incisions and/or grooves on wood panels, and comprising a mechanical device for a dynamic adjustment of rotary tools, which allows to automatically and continuously adjust the distance between a tool and the other, without having to stop the machine nor having to provide for an intervention of specialized personnel.

Another object of the invention is to provide a machine configured to provide incisions and/or grooves on wood panels, and comprising a mechanical device for a dynamic adjustment of rotary tools, which allows to automatically perform machining operations on panels of different geometries and/or dimensions (such as recesses and/or channels), with no interruptions of the machine and the production line.

A further object of the invention is to provide a wood panel machine, comprising a mechanical device for a dynamic adjustment of rotary tools, which is particularly effective, reliable, convenient and economical, with respect to the prior art, and which can be used for any new or old machine for processing and, in particular, for providing incisions and/or grooves on wood panels (squaring).

These and other objects are achieved by a mechanical device for a dynamic adjustment of rotary tools, according to the attached claim 1. Further technical detailed features of the mechanical adjustment, which is the object of the invention, are given in the further dependent claims. Advantageously, the mechanical device included in the present invention is composed of a fixed stator (housing) and a rotor (consisting of one or more tools) freely mounted along the longitudinal axis, so as to obtain a dynamic shift between two or more cutters, without stopping the rotation of the shaft that gives a mechanical rotary motion to the cutters.

The stator is fixed to a machine for processing wooden panels, by using a suitable tool, and the cutters applied to the machine can be set for varying the cutting profile, so that the wood panel can be processed by means of a mechanical or electrical external action.

Further objects and advantages of this invention will become more clear from the following description, related to a preferred embodiment of the mechanical device for a dynamic adjustment of rotary tools, according to the invention, and from the appended drawings, in which:

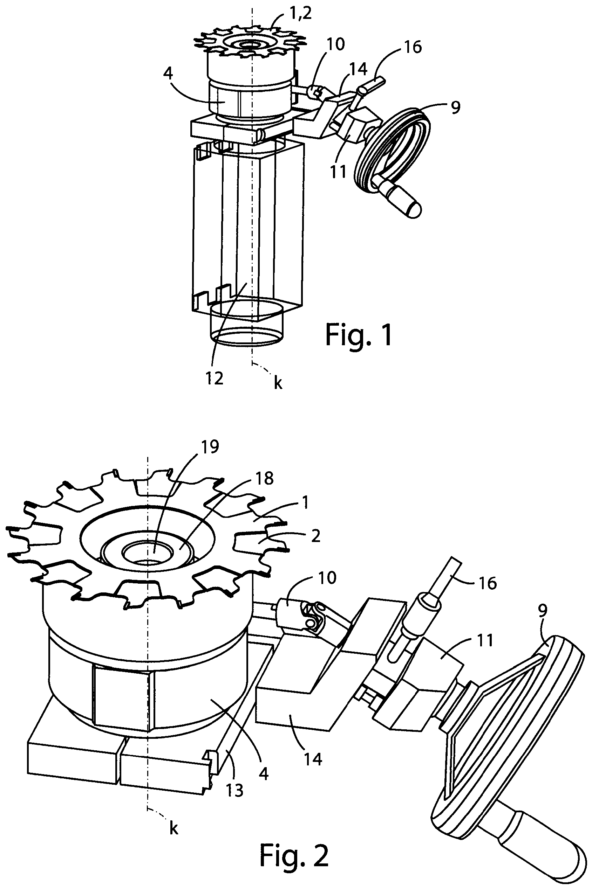

- figure 1 is an isometric view of the machine including a mechanical device for a dynamic adjustment of rotary tools, according to the invention;
- figure 2 is an enlarged partial isometric view of the mechanical device of figure 1, according to the present invention;

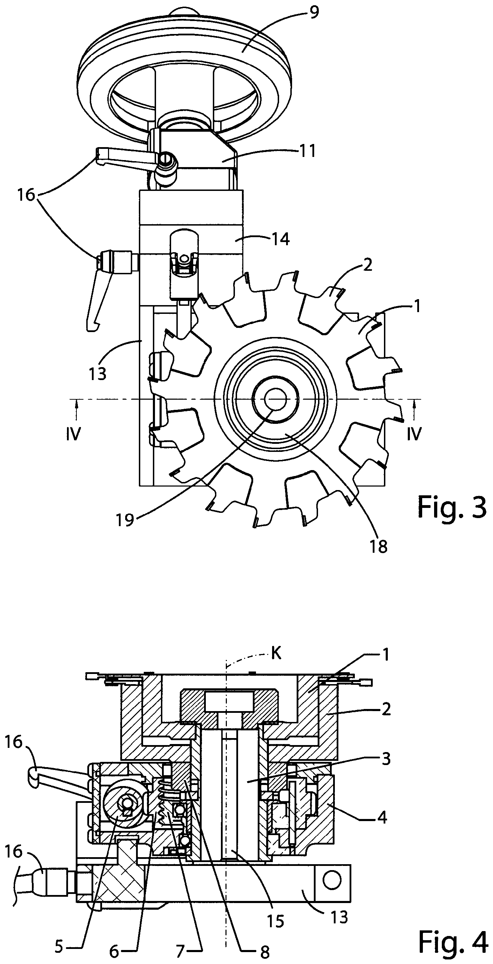

- figure 3 is a plan view of the mechanical device for a dynamic adjustment of rotary tools, according to the present invention;
- figure 4 is a sectional view taken along the line IV-IV of figure 3.

With reference to the above mentioned figures, the mechanical device for a dynamic adjustment of rotary tools, included in the present invention, is mainly used in machines for squaring wooden panels, in particular for making shaped grooves and/or channels and includes a drive motor 12 of the machine, suitable for moving according to a rotary motion the milling cutters 1, 2, which are coaxially arranged and which are simultaneously rotated and which are also supported by an inner and central bushing or sleeve 3, which is fixed on the top by a plug 18 with screw 19, and by an integral outer casing 4, which rests on a bracket 13; the drive motor 12 is connected to the bracket 13, on the side opposite to the casing 4 and to the cutters 1, 2.

A shaped element 14 is also fixed on the bracket 13 and said element 14 is configured to support a height indicator or tachometer 11, which is in turn mechanically connected to a handwheel 9 for a manual adjustment of the distance between the outer cutters 1, 2 along the longitudinal axis K.

The mechanical device for a dynamic adjustment of rotary tools, according to the present invention, substantially operates as follows.

By manually using the handwheel 9, it is possible to rotate, by means of the universal joint 10, the worm screw 5, which is coupled to the toothed and threaded wheel or ring 6, which, in turn, engages on the threaded nut 7, which finally moves the slide 8.

In particular, the cutter 2 is fixed to the slide 8 and therefore the cutter 2 moves axially when the slide 8 is moved, while the cutter 1 remains in a fixed position.

The slide 8 is also supported on its bearings for allowing the rotation.

Finally, by acting on the handwheel 9, it is possible to axially move the cutter 2 with respect to the fixed positions of the cutter 1 and of the central bushing or sleeve 3, without necessarily having to stop the drive motor 12. It follows that, when the machine is on, the user is able to make widen or narrow the cutting profile of the cutters 1, 2 and, therefore, the channel and/or the recess to be shaped, from a minimum opening value to a maximum opening value; said opening values are determined by the thickness of the cutters 1, 2 and from the processing requirements.

The universal joint 10 is advantageously used as a mechanical transmission and it is adjustable through the cuffs 16, in order to operate the worm screw 5 on the inside of the casing 4 and, at the same time, to make the casing 4 (fixed stator) integral with the wooden panels processing machine.

Then, the cutter 2 (rotor), having freedom to drive along the longitudinal axis K, with respect to the casing 4 (fixed stator), allows a dynamic displacement between the two rotary tools (the so-called "adjustable" drills 1 and 2), as there is no need to stop the rotation of the central friction 15, which is driven by the motor 12 and engaged in the bushing or sleeve 3.

Therefore there is a continuous automatic adjustment of the thickness and, consequently, a continuous variation of the cutting profile, only by adjusting the handwheel 9 from the outside by a user; said external regulation (which can be mechanically or electrically performed) can also be controlled thanks to the display indicator of the height indicator or tachometer 11.

Finally, the mechanical device for a dynamic adjustment of rotary tools, which is the object of the present invention, can also be used, with the same advantages and the same functionality as previously mentioned, with drive motors 12 and cutters 1, 2 which are currently available on the market and used in known wooden panels processing machines.

## Claims

1. A wood panel machine, comprising a mechanical device for a dynamic adjustment of rotary tools, and comprising at least one drive motor (12) which moves at least two coaxial milling cutters (1, 2) supported by a central bushing or sleeve (3) and by a casing (4) which rests on a bracket (13), said drive motor (12) being fitted on said bracket (13) and opposite to said casing (4) and said milling cutters (1, 2), wherein at least one (2) of said milling cutters (1, 2) is fixed on a slide (8), **characterized in that** said machine is configured to provide incisions and/or grooves on wood panels and **in that** the slide is moved by at least one first threaded ring (7), which engages on a second threaded and toothed ring (6) coupled to a worm screw (5), said slide (8), said first and second rings (6, 7) and said worm screw (5) being placed inside the casing (4) and said worm screw (5) being moved from outside the casing (4).

2. A wood panel machine according to claim 1, **characterized in that** said central sleeve (3) is placed inside the casing (4) and is fixed at the top by means of a cap (18) with screw (19).

3. A wood panel machine according to at least one of the preceding claims, **characterized in that** a shaped element (14) is fixed to said bracket (13), said shaped element (14) being in turn connected to a hand-wheel (9) that allows an adjustment of the distance between said milling cutters (1, 2) along a longitudinal axis (K) passing through said casing (4) and passing through said drive motor (12).

4. A wood panel machine according to claim 3, **characterized in that** said hand-wheel (9) is mechanically connected, via a mechanical transmission (10), to said worm screw (5), so that a rotation of said hand-wheel (9) causes a rotation of said worm screw (5).

5. A wood panel machine according to at least one of the preceding claims, **characterized in that** at least one first milling cutter (1) is firmly fixed, while at least one second milling cutter (2) is moved in an axial direction with respect to said casing (4) when said slide (8) moves.

6. A wood panel machine according to at least one of the preceding claims, **characterized in that** said distance between said milling cutters (1, 2) varies from a predetermined minimum value up to a predetermined maximum value, said distance being continuously variable during the wood panels machine working and during the driving of said drive motor (12), in order to obtain a continuous variation of the cutting profile of said milling cutters (1, 2).

7. A wood panel machine according to claim 4, **characterized in that** said mechanical transmission (10) is constituted by a ball joint or by a universal joint, in order to make integral said casing (4) with said wood panels machine.

8. A wood panel machine according to at least one of claims from 3 to 7, **characterized in that** said hand-wheel (9) is mechanically or electrically operated.

9. A wood panel machine according to at least one of the preceding claims, **characterized in that** said adjustment of the distance between said milling cutters (1, 2) is performed by means of said hand-wheel (9) and can be controlled by a user by means of an altitude indicator or tachometer (11), which is placed between said hand-wheel (9) and said shaped element (14) fixed to said bracket (13).

## Patentansprüche

1. Maschine für Holzpanelen, umfassend eine mechanische Vorrichtung zur dynamischen Anpassung von drehenden Werkzeugen, und zumindest einen Antriebsmotor (12) umfassend, der zumindest zwei koaxiale Fräswerkzeuge (1, 2) bewegt, die von einer zentralen Buchse oder Muffe (3) und von einem Gehäuse (4) gestützt sind, das auf einem Träger (13) ruht, wobei der Antriebsmotor (12) an dem Träger (13) und gegenüber dem Gehäuse (4) und den Fräswerkzeugen (1, 2) eingebaut ist, wobei zumindest eines (2) der Fräswerkzeuge (1, 2) an einer Gleitung (8) befestigt ist, **dadurch gekennzeichnet, dass** die Maschine konfiguriert ist, um Einschnitte und/oder Rillen an Holzpanelen bereitzustellen, und dass die Gleitung von zumindest einem ersten Gewindering (7) bewegt wird, der in einen zweiten Gewinde- und Zahnring (6) eingreift, der mit einer Schneckenschraube (5) gekoppelt ist, wobei die Gleitung (8), der erste und der zweite Ring (6, 7) und die Schneckenschraube (5) innerhalb des Gehäuses (4) untergebracht sind, und die Schneckenschraube (5) von außerhalb des Gehäuses (4) bewegt wird.

2. Maschine für Holzpanelen nach Anspruch 1, **dadurch gekennzeichnet, dass** die zentrale Muffe (3) innerhalb des Gehäuses (4) untergebracht und oben anhand einer Kappe (18) mit Schraube (19) befestigt ist.

3. Maschine für Holzpanelen nach zumindest einem der vorstehenden Ansprüche, **dadurch gekennzeichnet, dass** ein Formteil (14) am Träger (13) befestigt ist, wobei das Formteil (14) wiederum mit einem Handrad (9) verbunden ist, das eine Anpassung des Abstandes zwischen den Fräswerkzeugen (1, 2) entlang einer Längsachse (K), die durch das Gehäuse (4) durchgeht und durch den Antriebsmotor (12) durchgeht, erlaubt.

4. Maschine für Holzpanelen nach Anspruch 3, **dadurch gekennzeichnet, dass** das Handrad (9) mechanisch über ein mechanisches Übertragungselement (10) mit der Schneckenschraube (5) verbunden ist, so dass eine Drehung des Handrads (9) eine Drehung der Schneckenschraube (5) verursacht.

5. Maschine für Holzpanelen nach zumindest einem der vorstehenden Ansprüche, **dadurch gekennzeichnet, dass** zumindest ein erstes Fräswerkzeug (1) fest befestigt ist, während zumindest ein zweites Fräswerkzeug (2) in eine axiale Richtung in Bezug auf das Gehäuse (4) bewegt wird, wenn sich die Gleitung (8) bewegt.

6. Maschine für Holzpanelen nach zumindest einem der vorstehenden Ansprüche, **dadurch gekennzeichnet, dass** der Abstand zwischen den Fräswerkzeugen (1, 2) von einem Mindestwert bis hin zu einem Höchstwert variiert, wobei der Abstand während des Arbeitens der Maschine für Holzpanelen und während des Antreibens des Antriebsmotors (12) kontinuierlich variabel ist, um eine kontinuierliche Variation des Schneideprofils der Fräswerkzeuge (1, 2) zu erhalten.

7. Maschine für Holzpanelen nach Anspruch 4, **dadurch gekennzeichnet, dass** das mechanische Übertragungselement (10) aus einem Kugelgelenk oder einem Kreuzgelenk besteht, damit das Gehäuse (4) mit der Maschine für Holzpanelen zu einem Ganzen wird.

8. Maschine für Holzpanelen nach zumindest einem der Ansprüche von 3 bis 7, **dadurch gekennzeichnet, dass** das Handrad (9) mechanisch oder elektrisch betrieben wird.

9. Maschine für Holzpanelen nach zumindest einem der vorstehenden Ansprüche, **dadurch gekennzeichnet, dass** die Anpassung des Abstandes zwischen den Fräswerkzeugen (1, 2) anhand des Handrads (9) ausgeführt wird, und von einem Benutzer über eine Höhenanzeige oder einem Tachometer (11) gesteuert werden kann, der zwischen dem Handrad (9) und dem Formteil (14) am Träger (13) befestigt untergebracht ist.

## Revendications

1. Machine pour panneaux de bois, comprenant un dispositif mécanique pour un ajustement dynamique d'outils rotatifs, et comprenant au moins un moteur d'entraînement (12) qui déplace au moins deux fraises coaxiales (1, 2) supportées par une douille ou manchon central (3) et par un boîtier (4) qui repose sur un support (13), ledit moteur d'entraînement (12) étant monté sur ledit support (13) et opposé audit boîtier (4) et auxdites fraises (1, 2), au moins une (2) desdites fraises (1, 2) étant fixée sur une glissière (8), **caractérisée en ce que** ladite machine est configurée pour fournir des incisions et/ou des rainures sur des panneaux de bois et **en ce que** la glissière est déplacée par au moins une première bague filetée (7), qui coopère avec une seconde bague filetée et dentée (6) couplée à une vis sans fin (5), ladite glissière (8), lesdites première et seconde bagues (6, 7) et ladite une vis sans fin (5) étant placées à l'intérieur du boîtier (4) et ladite vis sans fin (5) étant déplacée depuis l'extérieur du boîtier (4).

2. Machine pour panneaux de bois selon la revendication 1, **caractérisée en ce que** ledit manchon central (3) est placé à l'intérieur du boîtier (4) et est fixé au sommet au moyen d'un capuchon (18) avec une vis (19).

3. Machine pour panneaux de bois selon l'une au moins des revendications précédentes, **caractérisée en ce qu'**un élément conformé (14) est fixé audit support (13), ledit élément conformé (14) étant à son tour relié à un volant (9) qui permet un ajustement de la distance entre lesdites fraises (1, 2) selon un axe longitudinal (K) passant à travers ledit boîtier (4) et passant à travers ledit moteur d'entraînement (12).

4. Machine pour panneaux de bois selon la revendication 3, **caractérisée en ce que** ledit volant (9) est relié mécaniquement, par l'intermédiaire d'une transmission mécanique (10), à ladite vis sans fin (5), de sorte qu'une rotation dudit volant (9) provoque une rotation de ladite vis sans fin (5).

5. Machine pour panneaux de bois selon l'une au moins des revendications précédentes, **caractérisée en ce qu'**au moins une première fraise (1) est fermement fixée, tandis qu'au moins une seconde fraise (2) est déplacée dans une direction axiale par rapport audit boîtier (4) lorsque ladite glissière (8) se déplace.

6. Machine pour panneaux de bois selon l'une au moins des revendications précédentes, **caractérisée en ce que** ladite distance entre lesdites fraises (1, 2) varie d'une valeur minimum prédéterminée jusqu'à une valeur maximum prédéterminée, ladite distance étant variable en continu pendant le fonctionnement de la machine pour panneaux de bois et pendant l'entraînement dudit moteur d'entraînement (12), de manière à obtenir une variation continue du profil de coupe desdites fraises (1, 2).

7. Machine pour panneaux de bois selon la revendication 4, **caractérisée en ce que** ladite transmission mécanique (10) est constituée d'un joint à rotule ou d'un joint universel, afin de rendre ledit boîtier (4) solidaire de ladite machine pour panneaux de bois.

8. Machine pour panneaux de bois selon au moins l'une des revendications 3 à 7, **caractérisée en ce que** ledit volant (9) est actionné mécaniquement ou électriquement.

9. Machine pour panneaux de bois selon au moins l'une des revendications précédentes, **caractérisée en ce que** ledit ajustement de la distance entre lesdites fraises (1, 2) est réalisé au moins dudit volant (9) et peut être commandé par un utilisateur au moyen d'un indicateur d'altitude ou tachymètre (11), qui est placé entre ledit volant (9) et ledit élément conformé (14) fixé audit support (13).
